# EUROPÄISCHE PATENTANMELDUNG

(11) **EP 4 329 167 A1**
(43) Veröffentlichungstag der Anmeldung: **28.02.2024**
(21) Anmeldenummer: 22205664.0
(22) Anmeldetag: 04.11.2022
(51) Int. Cl.: H02K 15/02, H02K 15/12, H01F 41/02, H02K 1/20, H02K 1/32

(54) **VERFAHREN ZUM PAKETIEREN VON BLECHTEILEN AUS EINEM ELEKTROBAND ODER -BLECH ZU ZUMINDEST EINEM BLECHPAKET**

(71) Anmelder: voestalpine Stahl GmbH, 4020 Linz (AT)
(72) Erfinder: Fluch, Ronald, 4020 Linz (AT); Haslmayr, Michael, 4048 Puchenau (AT)
(74) Vertreter: Jell, Friedrich

(57) **Zusammenfassung**

Es wird ein Verfahren zum Paketieren von Blechteilen (4) aus einem Elektroband (3) oder -blech zu mindestens einem Blechpaket (2) mit zumindest einem Kühlkanal (2a) gezeigt. Um einen leckagefreien Kühlkanal (2a) zu schaffen, wird vorgeschlagen, dass eine Dichtheitsprüfung (11) des Kühlkanals (2a) des vorverklebten Blechpakets (2) vorgenommen wird und bei Detektion eines Lecks der Klebstoff (8) der aufeinandergestapelten Blechteile (4) in axialer Richtung (A) der aufeinandergestapelten Blechteile (4) unter zweiten Druck (P2) gesetzt werden, um damit eine geforderte Dichtheit herzustellen.

## Beschreibung

Die Erfindung betrifft ein Verfahren zum Paketieren von Blechteilen aus einem Elektroband oder -blech zu mindestens einem Blechpaket mit zumindest einem Kühlkanal.

Bei der Herstellung von Blechpaketen aus mit einer Schmelzklebeschicht beschichteten Blechteilen ist es bekannt (WO2021175875A1), das Blechpaket und damit die Schmelzklebelacksicht beim Verkleben der Blechteile in axialer Richtung unter Druck zu setzen, um damit eine gewünschte Pakethöhe sicherzustellen. Neben einer exakten Pakethöhe ist auch eine vollflächige Verklebung zwischen den Blechteilen erforderlich - dies insbesondere, wenn vom Blechpaket eine Druckbeständigkeit bei Flüssigkeitskühlung gefordert wird. Derartige Anforderungen bestehen etwa bei Blechpaketen im Hochleistungsbereich, beispielsweise bei Elektromotoren, welche Blechpakte hierzu meist mehrere Kühlkanäle aufweisen, die mit einem flüssigen Fluid, nämlich einer Kühlflüssigkeit, durchströmt werden.

Tritt nun bei einer Dichtheitsprüfung am fertigen Blechpaket ein Leck auf, bedarf es einer nachträglichen Abdichtung des Kühlkanals, was vergleichsweise aufwendig ist und daher in den meisten Fällen zu einem Ausscheiden des endverklebten Blechpakets führt.

Die Erfindung hat sich daher die Aufgabe gestellt, das eingangs geschilderte Verfahren zur Herstellung eines Blechpakets mit einem Kühlkanal derart zu verändern, dass reproduzierbar Blechpakete mit einem flüssigkeitsdichten Kühlkanal hergestellt werden können.

Die Erfindung löst die gestellte Aufgabe durch die Merkmale des Anspruchs 1.

Indem am vorverklebten und nicht -wie im Stand der Technik- am endverklebten Blechpaket eine Dichtheitsprüfung des Kühlkanals vorgenommen wird, kann im Gegensatz zum Stand der Technik noch an der Verklebung zwischen den Blechteilen eine Maßnahme ergriffen werden. So ist es nämlich möglich, bei Detektion eines Lecks die aufeinandergestapelten Blechteile in axialer Richtung unter zweiten Druck zu setzen, um damit auf Fehlstellen an der Klebstoffverbindung einzuwirken - diese also zu beheben. Dies ist deshalb erreichbar, weil für das Vorverkleben der Gelpunkt des Polymers des Klebstoffs nicht erreicht oder überschritten worden ist. Daher kann auch mit dem erfindungsgemäßen Druck auf den Klebstoff in dessen Zustand der Vorverklebung hinsichtlich seiner Verklebung noch eingewirkt werden. Beispielsweise kann dadurch ein flächigerer Kontakt und/oder eine Kontaktoberfläche durch ein Lösungsmittel des Klebstoffs verbessert angelöst und/oder eine engere Verkettung von Polymerketten des Klebstoffs, etc. erreicht werden, um damit die geforderte Dichtheit an der Verklebung der Blechteile herzustellen. Im Gegensatz zum Stand der Technik können also vor dem Endverkleben der Blechteile am Blechpaket bereits Maßnahmen getroffen werden, Fehler bei der Dichtheit des Flüssigkeitskanals zu beheben, wodurch anhand des erfindungsgemäßen Verfahren reproduzierbar flüssigkeitsdichte Blechpakete herstellbar sind.

Vorzugsweise weist der thermisch aktivierbare Klebstoff für das Vorverkleben eine erste Temperatur auf, welche erste Temperatur größer der Glasübergangstemperatur des Klebstoffs und kleiner der Aktivierungstemperatur des Klebstoffs liegt. Damit wird beim Vorverkleben verhindert, dass der thermisch aktivierbare Klebstoff zwar an einer Fügefläche haftet, damit jedoch noch nicht in den ausgehärteten Zustand, beispielsweise durch Vernetzung, übergeht. Damit bleibt es möglich, im Falle eines detektieren Lecks noch auf die Klebstoffverbindung einzuwirken, um im Verfahren jene am endverklebten Blechpaket geforderte Dichtheit herzustellen. Dieser endverklebte Zustand ist erreichbar, indem der thermisch aktivierbare Klebstoff auf eine zweite Temperatur, die größer gleich der Aktivierungstemperatur ist, enderwärmt und damit die Blechteile miteinander endverklebt werden.

Der thermisch aktivierbare Klebstoff kann beispielsweise ein Schmelzklebelack sein, der auch unter Backlack bekannt ist. Im Falle des Schmelzklebelacks stellt die Aktivierungstemperatur eine Verbackungstemperatur des Schmelzklebelacks dar.

Vorzugsweise wird bei der Dichtheitsprüfung zur Detektion eines Lecks ein gasförmiges Fluid in den Kühlkanal eingebracht. Beispielsweise kann sich hierzu ein Prüfgas auszeichnen. Insbesondere die Verwendung eines gasförmigen Fluids bei der Dichtheitsprüfung kann ein schnelles und sich damit auch bei einer Inline-Fertigung von Blechpaketen geeignetes Verfahren gewährleisten.

Weist das gasförmige Fluid Helium und/oder Wasserstoff auf, kann dies die Detektion selbst einer kleinen Leckage bei vergleichsweise kurzer Prüfzeit ermöglichen. Beispielsweise ist das gasförmige Fluid ein Formiergas.

Die Prüfzeit der Dichtheitsprüfung ist weiter verringerbar, wenn im auf Dichtheit zu prüfenden Kühlkanal ein Überdruck und/oder außerhalb des auf Dichtheit zu prüfenden Kühlkanals ein Unterdruck auf das vorverklebte Blechpaket wirken oder wirkt. Insbesondere ein Überdruck im zu prüfenden Kühlkanal im Bereich von 0,1 bis 2 bar kann sich hierzu eignen - also ein, im Vergleich zum auf das Blechpaket von außen wirkenden Druck, um 0,1 bis 2 bar erhöhter Druck.

Vorzugsweise wird bei der Dichtheitsprüfung das vorverklebte Blechpaket in eine Vakuumkammer eingebracht, um die Sensitivität der Detektion selbst kleinster Verklebungsfehler am vorverklebten Blechpaket weiter erhöhen. Damit ist die Reproduzierbarkeit des Verfahrens in der Herstellung von Blechpaketen mit flüssigkeitsdichten Kühlkanälen weiter erhöhbar.

Als ausreichend flüssigkeitsdicht kann sich herausstellen, wenn bei der Dichtheitsprüfung ein Leck bis zu einer Leckrate von 10⁻⁴ mbar l/s (Millibar*Liter/Sekunde) detektiert wird (gemessen nach DIN EN 1779). Vorzugsweise wird eine Leckrate im Bereich von 10⁻³ mbar l/s bis 10⁻⁴ mbar l/s detektiert - was für eine vergleichsweise kurze Prüfzeit sorgen kann.

Vorzugsweise weist der Klebstoff beim zweiten unter Druck Setzen die erste Temperatur auf, um diesen Zustand des Klebstoffs zu nutzen, eventuelle Fehlstellen in der Verklebung schneller und reproduzierbarer beheben zu können.

Die Zuverlässigkeit in der Behebung von zu Leckage führenden Fehlern in der Verklebung der Blechteile ist weiter zu erhöhen, wenn das zweite unter Druck Setzen zumindest einen Druckimpuls aufweist. Damit können beispielsweise selbst Unterschiede bei der Fließeigenschaft der Schmelzklebelackschichten überwunden werden - was die vollflächige Anbindung zwischen den Blechteilen durch Ausbildung einer homogeneren Grenzschicht weiter begünstigen kann.

Beispielsweise kann zur Ausübung des Druckimpulses eine Beaufschlagung mit Impulsdruck oder eine Entlastung mit Impulsdruck erfolgen.

Das zweite unter Druck Setzen kann auch mehrere Druckimpulse aufweisen.

Vorzugsweise beaufschlagt der Druckimpuls den Klebstoff mit Impulsdruck im Bereich von 0,5 bis 10 N/mm² (Newton/Quadratmillimeter). Es kann sich aber bereits als ausreichend herausstellten, wenn der Impulsdruck im Bereich von 2 bis 6 N/mm² liegt. Beispielsweise erfolgt das zweite unter Druck Setzen mit direkt nacheinander folgenden Druckimpulsen. Dies kann beispielsweise periodisch erfolgten. Diese Periode T kann im Bereich von 0,1 bis 20 sec liegen.

Besonders einfache Verfahrensbedingungen können sich ergeben, wenn die erste Temperatur im Bereich von 80 bis 220 °C liegt. Vorzugsweise liegt die erste Temperatur im Bereich von 80 bis kleiner 180 °C. Beispielsweise liegt die erste Temperatur im Bereich von 100 bis 150 °C, was eine Gefahr eines Ausquetschens von Schmelzklebelack aus dem Klebespalt zwischen den Blechteilen gering halten kann.

Die Verfahrensbedingungen können sich beispielsweise weiter vereinfachen, wenn die zweite Temperatur im Bereich von 180 °C bis 250 °C, insbesondere im Bereich von 180 °C bis 220 °C, liegt.

Vorzugsweise werden Blechteile aufeinandergestapelt, die auf einer ihrer Flachseiten eine Klebstoffschicht aufweisen. Werden insbesondere Blechteile aufeinandergestapelt, die auf beiden ihrer Flachseiten eine Schmelzklebelackschicht aufweisen, kann damit beispielsweise die Beständigkeit des Blechpakets gegenüber einer Flüssigkeitskühlung weiter erhöht werden, da sich die Anbindung auf eine Verbindungsfläche zwischen zwei ähnlich Fügepartnern reduziert. Zudem wird ermöglicht, dass der Druckimpuls auf die beiden viskosen Schmelzklebelackschichten gleichzeitig Einfluss nimmt - was die Verbindung zwischen diese und damit den Blechteilen weiter verbessern kann.

Beispielsweise beträgt die Dicke jedes Blechteils zwischen 0,09 und 0,49 mm, insbesondere 0,09 bis 0,29 mm, und/oder beträgt die Dicke der Klebstoffschicht jedes Blechteils zwischen 2 und 12 µm, insbesondere von 4 bis 8 µm. Damit sind besonders vorteilhafte Voraussetzungen für eine hohe Reproduzierbarkeit des Verfahrens erreichbar.

Ein vergleichsweise hoher hydraulischer Druck im Kühlkanal kann beispielsweise aufgenommen werden, wenn die aufeinandergestapelten Blechteile zu einem Blechpaket vollflächig vorverklebt und/oder endverklebt werden.

In den Figuren ist beispielsweise der Erfindungsgegenstand anhand einer Ausführungsvariante näher dargestellt. Es zeigen
- Fig. 1: eine schematische Darstellung einer Vorrichtung zur Durchführung des erfindungsgemäßen Verfahrens,
- Fig. 1a: eine vergrößerte Darstellung eines Teils zur Dichtheitsprüfung der Vorrichtung nach Fig. 1,
- Fig.2: eine Schnittansicht auf einen, zu einer Leckage führenden Klebespalt zwischen zwei Blechteilen eines Blechpakets und
- Fig.3: eine Schnittansicht auf den Klebespalt der Fig. 2 nach Detektion eines Lecks und unter zweiten Druck Setzen.

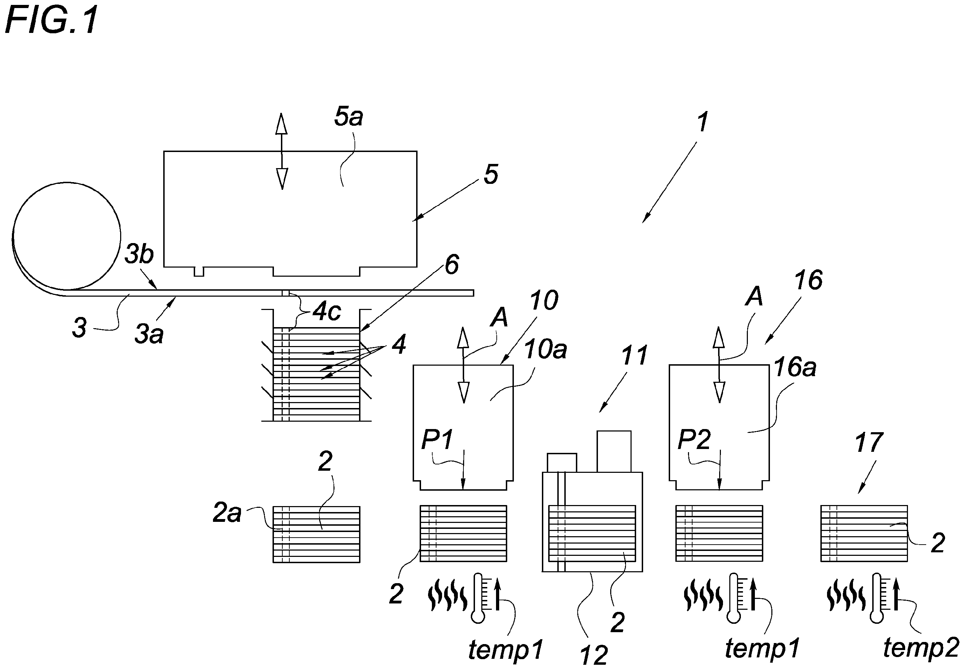

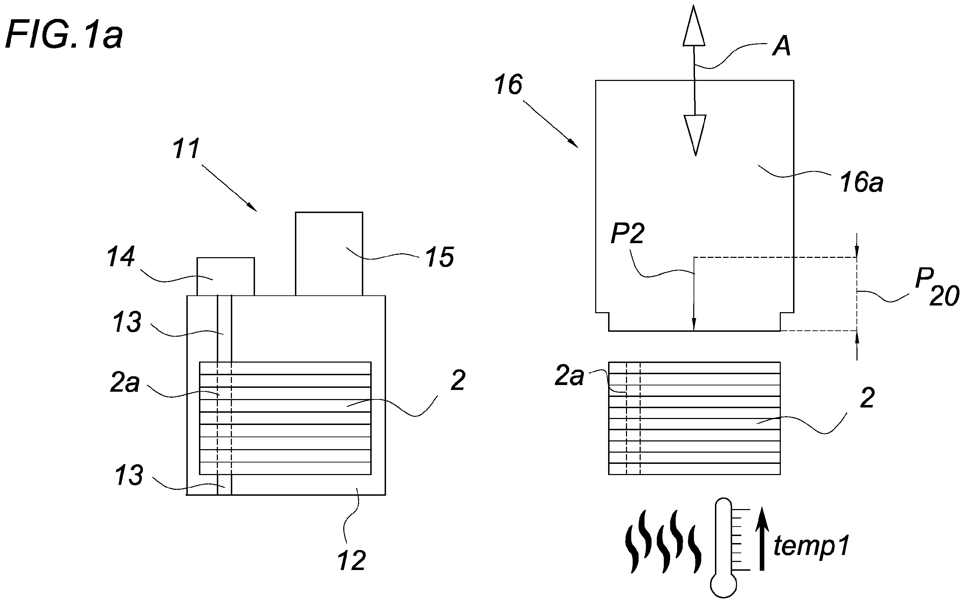

Nach der Figur 1 ist beispielsweise eine Vorrichtung 1 dargestellt, mit welcher Blechpakete 2 kontinuierlich hergestellt werden. Die Blechpakete 2 werden vorzugsweise für elektromagnetische Bauteile, beispielsweise für elektrische Maschinen, verwendet - und weisen zumindest einen durch das Blechpaket 2 axial durchgehenden, außermittig angeordneten Kühlkanal 2a auf. Der Kühlkanal 2a wird bei Verwendung des Blechpakets 2 mit einem flüssigen Fluid, nämlich einer Kühlflüssigkeit, durchflossen, um das Blechpaket 2 zu kühlen.

Zur Herstellung eines Blechpakets 2 mit dem Kühlkanal 2a werden mit der Vorrichtung 1 - siehe in Fig. 1 - aus einem Elektroband 3 mehrere Blechteile 4 mit einer Aussparung 4c vereinzelt, welche Aussparungen 4c der Blechteile 4 nach dem Übereinanderstapeln den Kühlkanal 2a im Blechpaket 2 - welcher im Ausführungsbeispiel das Blechpaket 2 vollständig in axialer Richtung A des Blechpakets 2 durchläuft - ausbilden.

Das für die Blechteile 2 verwendete Elektroband 3 weist auf mindestens einer ihrer - im Ausführungsbeispiel auf beiden - Flachseiten 3a, 3b eine diese Flachseiten 3a, 3b vollflächig bedeckende Schicht 7 aus Klebstoff 8, nämlich einen thermohärtbaren Schmelzklebelack 8a, beispielsweise aufweisend eine Epoxydharzbasis und Dicyandiamid als Vernetzer, auf. Der thermohärtbare bzw. heißhärtende Schmelzklebelack 8a wird auch als Backlack bezeichnet. Beispielsweise kann ein katalysierter Backlack Anwendung finden, etwa ein Backlack mit Depotbeschichtung zur rascheren Ausreaktion.

Der Schmelzklebelack 8a am Elektroband 3 befinden sich im B-Zustand. Die Glasübergangstemperatur Tg des beispielsweise verwendeten Schmelzklebelacks 8a im Bereich von 65 bis 85 °C (Grad Celsius), gemessen nach ISO 11357-2, liegt. Die Verbackungstemperatur als Aktivierungstemperatur des beispielsweise verwendeten Schmelzklebelacks 8a liegt im Bereich größer gleich 180 Grad Celsius. Diese Kennwerte zur Glasübergangstemperatur Tg und/oder Verbackungstemperatur können aber entsprechend dem verwendeten Schmelzklebelack 8a variieren.

Die Vereinzelung der Blechteile 4 erfolgt mit einem Stanzwerkzeug 5, das auch Teil eines nicht dargestellten Folgestanzwerkzeugs sein kann. Andere Einrichtungen zur Abtrennung von Blechteilen 4, beispielsweise mit Laser, sind vorstellbar. Das Stanzwerkzeug 5 bringt auch die Aussparung 4c im Blechteil 4 für den Kühlkanal 2a im Blechpaket 2 in das Elektroband 3 ein.

Vorzugsweise beträgt die Dicke des Blechs jedes Blechteils 4 zwischen 0,09 und 0,49 mm (Millimeter), nämlich im Ausführungsbeispiel 0,24 mm. Die Dicke jeder Klebstoffschicht 7 beträgt zwischen 2 und 12 µm (Mikrometer), nämlich im Ausführungsbeispiel 5 µm. Dies gilt auch für das Elektroband 3, von dem das Blechteil 4 stammt. Damit ergibt sich eine Dicke für jede einzelne Blechteil 4 am Blechpaket 2 im Bereich von 0,1 und 0,5 mm, nämlich im Ausführungsbeispiel 0,25 mm.

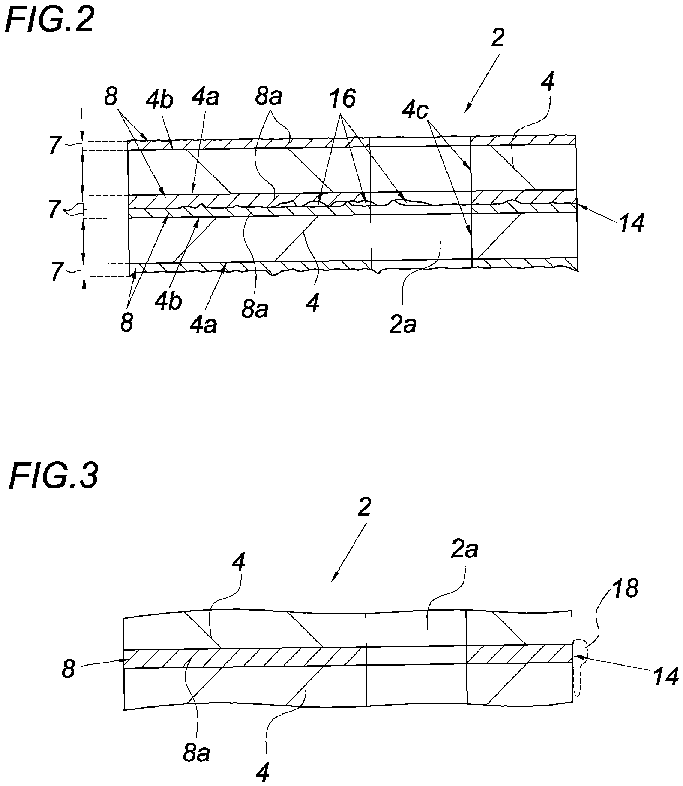

Die Blechteile 4 werden vom Stanzstempel 5a des Stanzwerkzeugs 5 in eine Stapeleinrichtung 6 gedrängt. In dieser Stapeleinrichtung 6 werden die Blechteile 4, welche auf mindestens einer ihrer Flachseiten 4a, 4b eine Klebstoffschicht 7, nämlich aus Schmelzklebelack 8a, aufweisen, aufeinandergestapelt. Im Ausführungsbeispiel -wie in Fig. 3 auch zu erkennen, weisen die Blechteile 4 auf beiden ihrer Flachseiten 4a, 4b diese Schmelzklebelackschicht 7 auf.

Alle aufeinandergestapelten Blechteile 4 verlassen die Stapeleinrichtung 6 als loses Blechpaket 2 bzw. werden beim oder nach dem Verlassen der Stapeleinrichtung 6 in Blechpakete 2 geteilt - welches Blechpaket 2 mit losen Blechteilen 4 unterhalb der Stapeleinrichtung 6 in Fig. 1 dargestellt ist.

Das lose Blechpaket 2 wird danach weiteren Verfahrensschritten unterworfen - und zwar wird es in einen ersten Ofen 9 eingebracht, um damit die Schmelzklebelackschichten 7 der aufeinandergestapelten Blechteile 4 auf eine erste Temperatur temp1 zu bringen, welche über der Glasübergangstemperatur Tg des Schmelzklebelacks 7a und unterhalb der Verbackungstemperatur des Schmelzklebelacks 7a liegt, erwärmt.

Dem ersten Ofen 9 ist eine Presseinrichtung 10 mit einem Presstempel 10a zugeordnet, der auf das Blechpaket 2 eine erste axiale Druckkraft P1 ausübt - also in axiale Richtung A des Blechpakets 2, welche Richtung A parallel zur Stapelrichtung 6 der aufeinandergestapelten Blechteile 4 verläuft. Die erste Druckkraft P1 ist in der Höhe von 3 N/mm² (Newton pro Quadratmillimeter) und wird für 30 Sekunden ausgeübt. Damit vorverkleben die Blechteile 4 vollflächig miteinander zu einem Blechpaket 2, wobei der Klebstoff 8 zwischen den Blechteilen 2 noch nicht ausgehärtet ist bzw. im Falle eines Schmelzklebelacks 8a noch nicht verbacken ist. Dies, weil der Gelpunkt des Polymers des Schmelzklebelacks 8a nicht erreicht oder überschritten worden ist.

Alternativ zum ersten Ofen 9 ist vorstellbar - was jedoch nicht dargestellt ist - dass die Blechteile 2 in der Stapeleinrichtung 6 noch vor dem Verlassen auf diese erste Temperatur temp1 gebracht werden - was den Verfahrensschritt des Erwärmens mit dem ersten Ofen 9 hinfällig machen kann, weil damit auch diese Blechteile 4 vollflächig miteinander zum Blechpaket 2 vorverklebt werden können. Die Presseinrichtung 10 kann aber zum unter ersten Druck P1 Setzen verwendet werden.

Das vorverklebte Blechpaket 2 wird in weiterer Folge einer Dichtheitsprüfung 11 unterworfen. In diesem Schritt wird geprüft, ob der Kühlkanal 2a des vorverklebten Blechpakets 2 ein Leck aufweist. Wie in Fig. 1a schematisch dargestellt, wird das Blechpaket 2 in eine Vakuumkammer 12 eingebracht - zudem werden an den Kühlkanal 2a des Blechpakets 2 Leitungen 13 gasdicht angeschlossen. Über diese Leitung 13 wird der Kühlkanal 2a mit einem Prüfgas als gasförmiges Fluid 14 geflutet. Aus dem Kühlkanal 2a ausgetretenes gasförmiges Fluid 14 kann in der Vakuumkammer als Leckage durch einen mit der Vakuumkammer 12 verbundenen Massenspektrometer 15 detektiert werden.

So wird bei einer Leckrate im Bereich von 10⁻³ mbar l/s bis 10⁻⁴ mbar l/s eine Maßnahme ergriffen, um damit eine geforderte Dichtheit am Blechpaket 2 herzustellen. Hierzu wird das vorverklebte Blechpaket 2 in eine weitere Presseinrichtung 16 mit einem Presstempel 16a eingebracht. In diesem Verfahrensschritt wird der Klebstoff 8 der aufeinandergestapelten Blechteile 4 in axialer Richtung A der aufeinandergestapelten Blechteile 4 unter zweiten Druck P2 gesetzt werden, um die geforderte Dichtheit herzustellen.

Der zweite Druck P2 reicht aus, eine vollständige Anbindung der beiden Klebstoffschichten 7 aneinander zu erreichen, um damit die freien Bereiche 16 zwischen den Schmelzklebelackschichten 7 zu beheben - wie in Fig. 3 in Zusammenschau mit Fig. 2 erkennbar. Damit ist reproduzierbar ein vorverklebtes Blechpaket 2 mit einem leckagefreien Kühlkanal 2a geschaffen.

Nachfolgend werden die Blechteile 4 vollflächig miteinander zu einem Blechpaket 2 verbacken bzw. damit der Schmelzklebelack 7a in den C-Zustand übergeführt. Damit wird durch die Endverklebung der leckagefreie Zustand des Blechpakets 2 sichergestellt. Für diese Endverklebung wird das Blechpaket 2 in einen weiteren Ofen 17 eingebracht, wo der Klebstoff 8 des Blechpakets 2 auf eine zweite Temperatur temp2, die größer gleich der Verbackungstemperatur des Schmelzklebelacks 7a der Schmelzklebelackschichten 7 ist, enderwärmt wird, um die aufeinandergestapelten Blechteile miteinander bei ausreichend langer Verbackungszeit zu verbacken. Bei diesem Schritt kann auf die Blechteile auch ein konstanter Druck ausgeübt werden, um beispielsweise die Pakethöhe des Blechpakets 2 einzustellen. Beispielsweise liegt die zweite Temperatur temp2 bei 200 °C (200 Grad Celsius), die Verbackungszeit bei 1 Minute bei einer eventuellen Druckbelastung auf das Blechpaket 2 von 0,3 N/mm².

Weiter ist vorstellbar, jedoch nicht dargestellt, dass vor der Dichtheitsprüfung 11 vom vorverklebten Blechpaket 2 mithilfe eines Messverfahrens die Pakethöhe erfasst wird und bei Unterschreitung des Toleranzbereichs von dieser erfassten Pakethöhe zumindest ein zusätzliches Blechteil 4 auf eine Stirnseite des Blechpakets 2 aufgebracht wird, um damit die Pakethöhe an eine Höhe im Toleranzbereich zu einer vorgegebenen Sollpakethöhe anzupassen.

Wie zudem in Fig. 1 und Fig. 1a erkennbar, befinden sich das Blechpaket 2 und damit auch dessen Klebstoff 8 während der zweiten Drucks P2 auf der ersten Temperatur temp1. Dies stellt eine fehlerfreie Vorverklebung der Blechteile 4 sicher. Die erste Temperatur temp1 liegt im Bereich von 80 bis 220 °C, nämlich beträgt 120 °C.

Die Belastung des vorverklebten Blechpakets 2 mit einem zweiten Druck P2 erfolgt auf besondere Weise. So wird ein Druckimpuls auf das Blechpaket 2 ausgeübt, indem eine Beaufschlagung mit Impulsdruck P₂₀ und nachfolgender Entlastung von Impulsdruck P₂₀ erfolgt. Dies erfolgt mehrmals, wodurch sich eine periodische Impulsfolge ergibt.

Hierzu belastet die Presseinrichtung 16 das Blechpaket 2 mit einem zweiten Druck P2 in der Höhe P₂₀ bzw. mit dem Impulsdruck im Bereich von 0,5 bis 20 N/mm², im Ausführungsbeispiel 5 N/mm². Diese Beaufschlagung mit zweiten Druck P2 in der Höhe P₂₀ und Entlastung von diesem zweiten Druck P2 in der Höhe P₂₀ erfolgt mit einer gleichen Dauer t₁ bzw. t₂, was eine Periode T im Bereich von 0,1 bis 20 sec, im Ausführungsbeispiel 2 Sekunden, ergibt. Dies stellt eine hohe Reproduzierbarkeit in der Herstellung von Blechpaketen 2 mit flüssigkeitsdichten Kühlkanälen 2a sicher.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Verfahren zum Paketieren von Blechteilen (4) aus einem Elektroband (3) oder -blech zu mindestens einem Blechpaket (2) mit zumindest einem Kühlkanal (2a), bei dem
die Blechteile (4), welche jeweils mindestens eine Aussparung (4c) für den Kühlkanal (2a) und an mindestens einer ihrer Flachseiten (4a, 4b) einen aushärtbaren Klebstoff (8) aufweisen, derart aufeinandergestapelt werden, dass die Aussparungen (4c) den sich im Blechpaket (2) erstreckenden Kühlkanal (2a) ausbilden,
die aufeinandergestapelten Blechteile (4) in axialer Richtung (A) der aufeinandergestapelten Blechteile (4) unter ersten Druck (P1) gesetzt und durch den aushärtbaren Klebstoff (8) miteinander zu einem Blechpaket (2) vorverklebt werden,
eine Dichtheitsprüfung (11) des Kühlkanals (2a) des vorverklebten Blechpakets (2) vorgenommen wird und bei Detektion eines Lecks die aufeinandergestapelten Blechteile (4) in axialer Richtung (A) unter zweiten Druck (P2) gesetzt werden, um damit eine geforderte Dichtheit herzustellen, und
das vorverklebte Blechpaket (2) durch Aushärten des aushärtbaren Klebstoffs (8) endverklebt wird.

2. Verfahren nach Anspruch 1, **dadurch gekennzeichnet, dass**
für das Vorverkleben der thermisch aktivierbare Klebstoff (8), insbesondere Schmelzklebelack (8a), eine erste Temperatur (temp1) aufweist, welche erste Temperatur (temp1) größer der Glasübergangstemperatur (Tg) des Klebstoffs (8) und kleiner der Aktivierungstemperatur des Klebstoffs (8), insbesondere Verbackungstemperatur des Schmelzklebelacks (8a), liegt, und
für das Endverkleben der thermisch aktivierbare Klebstoff (8) auf eine zweite Temperatur (temp2), die größer gleich der Aktivierungstemperatur, insbesondere Verbackungstemperatur des Schmelzklebelacks (8a), ist, enderwärmt und damit die Blechteile (4) miteinander endverklebt werden.

3. Verfahren nach Anspruch 1 oder 2, **dadurch gekennzeichnet, dass** bei der Dichtheitsprüfung (11) zur Detektion eines Lecks ein gasförmiges Fluid (14), insbesondere Prüfgas, in den Kühlkanal (2a) eingebracht wird.

4. Verfahren nach Anspruch 3, **dadurch gekennzeichnet, dass** das gasförmige Fluid (14) Helium und/oder Wasserstoff aufweist, insbesondere ein Formiergas ist.

5. Verfahren nach Anspruch 3 oder 4, **dadurch gekennzeichnet, dass** im auf Dichtheit zu prüfenden Kühlkanal (2a) ein Überdruck, insbesondere im Bereich von 0,1 bis 2 bar, und/oder außerhalb des auf Dichtheit zu prüfenden Kühlkanals (2a) ein Unterdruck auf das vorverklebte Blechpaket (2) wirken oder wirkt.

6. Verfahren nach einem der Ansprüche 1 bis 5, **dadurch gekennzeichnet, dass** bei der Dichtheitsprüfung (11) das vorverklebte Blechpaket (2) in eine Vakuumkammer (12) eingebracht wird.

7. Verfahren nach einem der Ansprüche 1 bis 6, **dadurch gekennzeichnet, dass** bei der Dichtheitsprüfung (11) ein Leck bis zu einer Leckrate von 10⁻⁴ mbar l/s, insbesondere im Bereich von 10⁻³ mbar l/s bis 10⁻⁴ mbar l/s, detektiert wird.

8. Verfahren nach einem der Ansprüche 2 bis 7, **dadurch gekennzeichnet, dass** der Klebstoff (8) beim zweiten unter Druck (P2) Setzen die erste Temperatur (temp1) aufweist.

9. Verfahren nach einem der Ansprüche 1 bis 8, **dadurch gekennzeichnet, dass** das zweite unter Druck (P2) Setzen zumindest einen, insbesondere mehrere, Druckimpuls (P20) aufweist.

10. Verfahren nach Anspruch 9, **dadurch gekennzeichnet, dass** der Druckimpuls (P₂₀) den Klebstoff (8) mit Impulsdruck im Bereich von 0,5 bis 10 N/mm², insbesondere von 2 bis 6 N/mm², beaufschlagt und/oder dass das zweite unter Druck (P2) Setzen mit direkt nacheinander folgenden Druckimpulsen (P₂₀), insbesondere periodisch, erfolgt.

11. Verfahren nach einem der Ansprüche 1 bis 10, **dadurch gekennzeichnet, dass** die erste Temperatur (temp1) im Bereich von 80 bis 220 °C, vorzugsweise im Bereich von 80 bis kleiner 180 °C, insbesondere im Bereich von 100 bis 150 °C, liegt.

12. Verfahren nach einem der Ansprüche 1 bis 11, **dadurch gekennzeichnet, dass** die zweite Temperatur (temp2) im Bereich von 180 °C bis 250 °C, insbesondere im Bereich von 180 °C bis 220 °C, liegt.

13. Verfahren nach einem der Ansprüche 1 bis 12, **dadurch gekennzeichnet, dass** Blechteile (4) aufeinandergestapelt werden, die auf einer ihrer Flachseiten (4a, 4b), insbesondere auf beiden ihrer Flachseiten (4a, 4b), eine Klebstoffschicht (7), insbesondere aus Schmelzklebelack (8a), aufweisen.

14. Verfahren nach einem der Ansprüche 1 bis 13, **dadurch gekennzeichnet, dass** die Dicke jedes Blechteils (4) zwischen 0,09 und 0,49 mm, insbesondere 0,09 bis 0,29 mm, beträgt und/oder dass die Dicke der Klebstoffschicht (7) jedes Blechteils (4) zwischen 2 und 12 µm, insbesondere von 4 bis 8 µm, beträgt.

15. Verfahren nach einem der Ansprüche 1 bis 14, **dadurch gekennzeichnet, dass** die aufeinandergestapelten Blechteile (4) zu einem Blechpaket (2) vollflächig vorverklebt und/oder endverklebt werden.
